# EUROPÄISCHE PATENTSCHRIFT

(11) **EP 1 364 306 B1**
(45) Veröffentlichungstag und Bekanntmachung des Hinweises auf die Patenterteilung: **26.07.2006**
(21) Anmeldenummer: 01986863.7
(22) Anmeldetag: 11.12.2001
(51) Int. Cl.: G06F 17/14

(54) **VERFAHREN UND SCHALTUNGSANORDNUNG ZUR DURCHFÜHRUNG EINER FAST FOURIER TRANSFORMATION SOWIE ANWENDUNG DERSELBEN**
METHOD AND CIRCUIT ARRANGEMENT FOR CARRYING OUT A FAST FOURIER TRANSFORMATION AND THE USE THEREOF
PROCEDE ET CIRCUIT POUR LA REALISATION D'UNE TRANSFORMATION DE FOURIER RAPIDE, ET LEUR UTILISATION

(30) Priorität: 13.12.2000 DE 10062759
(43) Veröffentlichungstag der Anmeldung: 26.11.2003
(73) Patentinhaber: IHP GmbH-Innovations for High Performance Microelectronics/Institut für innovative Mikroelektronik, 15236 Frankfurt an der Oder (DE)
(72) Erfinder: MAHARATNA, Koushik, 10557 Berlin (DE); GRASS, Eckhard, 12589 Berlin (DE); JAGDHOLD, Ulrich, 15236 Frankfurt (Oder) (DE)
(74) Vertreter: Eckey, Ludger
(86) Internationale Anmeldenummer: PCT/EP2001/014536
(87) Internationale Veröffentlichungsnummer: WO 2002/048901

(56) Entgegenhaltungen:
- WO-A-95/04963
- US-A- 5 313 413
- BRUGUERA J D ET AL: "IMPLEMENTATION OF THE FFT BUTTERFLY WITH REDUNDANT ARITHMETIC" IEEE TRANSACTIONS ON CIRCUITS AND SYSTEMS II: ANALOG AND DIGITAL SIGNAL PROCESSING, IEEE INC. NEW YORK, US, Bd. 43, Nr. 10, 1. Oktober 1996 (1996-10-01), Seiten 717-723, XP000641995 ISSN: 1057-7130
- HUI C C W ET AL: "A 64-POINT FOURIER TRANSFORM CHIP FOR VIDEO MOTION COMPENSATION USING PHASE CORRELATION" IEEE JOURNAL OF SOLID-STATE CIRCUITS, IEEE INC. NEW YORK, US, Bd. 31, Nr. 11, 1. November 1996 (1996-11-01), Seiten 1751-1761, XP000691460 ISSN: 0018-9200

## Beschreibung

Die Erfindung betrifft ein Verfahren und eine Schaltungsanordnung zur Durchführung einer Fast Fourier Transformation, insbesondere einer komplexen 64-Punkt Fast Fourier Transformation (FFT) auf der Basis einer komplexen 8-Punkt Fast Fourier Transformation.

Die Fourier Transformation wird in vielen Bereichen wie z. B. Optik, Wahrscheinlichkeitsrechnung, Quantenmechanik, Signaltheorie, Nachrichtentechnik und in vielen anderen Bereichen eingesetzt. In vielen Fällen wird eine schnelle - im Sinne der Verarbeitung - Implementierung der FFT/IFFT benötigt. Bei der Datenübertragung mobiler Systeme, wie IEEE8O2.11a und HiperLAN2, wird zudem noch eine energieeffiziente Lösung gefordert. Die meisten Implementierungen sind mit dem von Cooley und Tukey erfundenen Verfahren durchgeführt worden und beispielsweise in J. W. Cooley and J. W. Tukey, Math. Computation, vol. 19, pp. 297-301, 1965 beschrieben. Diese verwenden eine hohe Anzahl von Multiplikationen, welche einen relativ hohen Energieverbrauch verursachen.

Auch sind Verfahren bekannt, wie etwa die Dekomposition der FFT in Untereinheiten (kleinere FFTs), die dann mit Hilfe einer Drehoperation wieder zu einer größeren zusammengesetzt werden. Ein Beispiel finden wir unter G. D. Bergland, Math. Computation, Vol 22, April 1968, p. 275-279. Eine ähnliche Methode, die Zerlegung der FFT mit Hitfe einer 4-Punkt-FFT, wird in B. Suter, K. Stevens im Dokument US 5831883 beschrieben. Dabei werden die Multrplikat;onen der 4-Punkt-FFT durch einen konventionellen (asynchronen) sequentiellen Multiplizierer oder einen Booth- Multiplizierer realisiert.

Die beschriebenen bekannten Implementierungsvarianten führen zu einer hohen Anzahl von Multiplikations- und Additionsoperationen. Die hohe Anzahl notwendiger Multiplizierer und Addierer sowie die Komplexität des Verfahren verursacht einen relativ hohen Energieverbrauch, begrenzt die Verarbeitungsleistung und benötigt eine hohe Chipfläche.

Aufgabe der Erfindung ist es deshalb, die beschriebenen Nachteile des Standes der Technik zu beseitigen und eine Vorrichtung und ein Verfahren mit geringer Rechenzeit, hoher Energieeffizienz und geringem Speicherplatzbedarf vorzuschlagen.

Eine erfindungsgemäße Schaltungsanordnung zur Durchführung einer Fast Fourier Transformation besteht aus einem oder mehreren parallel oder seriell angeordneten Inputbuffern (IB), einem oder mehreren FFT-Blöcken (FFT), und die benötigten Koeffizienten fest in dem FFT-Block (FFT) implementiert sind, einem Multiplizierer (M), wobei dieser Multiplikationen nur aus Additionen, Subtraktionen und Schieberegisteroperationen durchführt und einem oder mehreren Buffern (B1/B2), welcher sowohl als Zwischenspeicher als auch als Datenausgangsspeicher (OP) dient.

Bei dem erfindungsgemäßen Verfahren werden Datensignale in einem oder mehreren parallel angeordneten Inputbuffern eingelesen, stehen am Ausgang des Inputbuffers parallel zur Verfügung und werden in Blöcken an einen FFT-Block übertragen. Der FFT-Block führt eine Transformation basierend auf der Dekomposition einer 64-Punkt Fast Fourier Transformation in eine 8-Punkt- Fast- Fourier- Transformation aus, wobei Multiplikationen intern durch die Verwendung von Addition, Subtraktion und Schieberegisteroperationen und die Transformationen mittels in dem FFT-Block implementierte Koeffizienten durchführt werden. Die aus dem FFT-Block seriell vorliegenden Datensignale durchlaufen einen Multiplizierer wobei dieser Multiplikationen nur aus Additionen, Subtraktionen und Schieberegisteroperationen durchführt, und werden in einem Buffer zwischengespeichert Die aus dem FFT-Block seriell vorliegenden Datensignale, die im Multiplizierer mit 1 zu multiplizieren wären, werden unter Umgehung des Multiplizierers direkt in dem Buffer zwischengespeichert. Die am Ausgang des Buffers parallel zur Verfügung stehenden Datensignale werden wiederum in den FFT-Block oder in einen zweiten FFT-Block eingeschrieben. Bei der gemultiplexten Varianten werden die Datensignale nach Durchlaufen des FFT-Blocks unter Umgehung des Multiplizierers und Zwischenspeicherung im Buffer seriell am Ausgang ausgelesen.

Bei einer "gepipelineten" Variante gemäß dem unabhängigen Anspruch 2 werden die Daten-signale nach Durchlaufen des weiteren FFT-Blocks unter Umgehung des Multiplizierers und Zwischenspeicherung in einem zweiten Buffer seriell am Ausgang ausgelesen.

Der Multiplizierer führt Multiplikationen nur aus Additionen, Subtraktionen und Schieberegisteroperationen durch und kann mehrere Multiplikationsoperationen parallel ausführen.

Eine inverse Fast Fourier Transformation wird durch Vertauschen von Imaginärteil und Realteil der Datensignale sowohl am Eingang als auch am Ausgang erzeugt.

Die Vorteile der erfindungsgemäßen Lösung beruhen in:
- der schnelleren Implementierung, geringer Rechenzeit, hoher Energleeffizienz und geringerem Speicherplatzbedart, d. h. sie ist energiesparender, platzsparend und schneller,
- die Implementierung dieser Methode kann als Verfahren für elektrische Schaltkreise wie z B. CPU's, Controller, DSP's oder auch direkt als elektrisch funktionierende Schaltung angewendet werden,
- wegen der reduzierten Komplexität - weniger Multiplizierer - sind die Rundungsfehler geringer,
- bei der Implementierung als elektrisch funktionierende Schaltung kann man auf die Anwendung eines globalen Speichers verzichten,
- die Koeffizienten im FFT-Block (FFT) sind fest implementiert und
- es werden weniger Koeffizienten im Multiplizierer (M) benötigt

Die Merkmale der Erfindung gehen außer aus den Ansprüchen auch aus der Beschreibung und den Zeichnungen hervor, wobei die einzelnen Merkmale jeweils für sich allein oder zu mehreren in Form von Unterkombinaüonen schutzfähige Ausführungen darstellen, für die hier Schutz beansprucht wird. Ausführungsbeispiele der Erfindung sind in den Zeichnungen dargestellt und werden im Folgenden näher erläutert. Die Zeichnungen zeigen:
- Fig. 1: Blockschaltbild mit einem Inputbuffer (IB), einem 8-Punkt FFT-Block (FFT) einem Buffer (B), die gemultiplexte Ausführungsvariante der FFT
- Fig. 2: Blockschaltbild mit einem Inputbuffer (IB), zwei 8-Punkt FFT-Blöcken (FFT) und zwei Buffern (B1/B2), die "gepipelinete" Ausführungsvariante der FFT

### Beispiel 1:

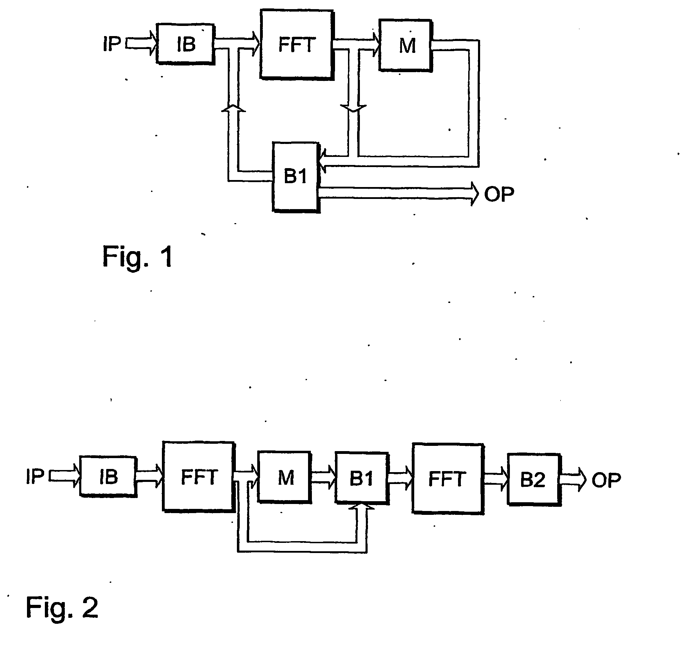

In diesem Ausführungsbeispiel, dargestellt in Figur 1, werden die zu verarbeitenden Daten am Eingang (IP) der Anordnung zunächst im Inputbuffer (IB) gespeichert und dann in Achtergruppen der 8-Punkt FFT zur Verarbeitung zugeführt. Im Anschluss an diese Berechnung wird eine Drehoperation im Komplex Multiplizierer (M) durchgeführt und die Daten werden im Buffer (B1) gespeichert. Dieser Vorgang wird so lange wiederholt, bis alle Inputdaten verarbeitet sind, d. h. bei einer 64-FFT genau 8 mal. Danach erfolgt nach dem oben beschriebenen Schema eine weitere 8-Punkt FFT der Daten aus Buffer (B1). Am Ende aller Berechnungen liegen die Daten im Buffer (B1) und werden am Ausgang (OP) ausgelesen. Es sind ein 8-Punkt FFT-Block (FFT) und ein Buffer (B1) sowie ein Multiplizierer (M) notwendig.

### Beispiel 2:

Die Figur 2 zeigt eine Schaltungsanordnung mit einem Inputbuffer (IB), zwei 8-Punkt FFT-Blödcen (FFT) und zwei Speichem. In dieser Ausführungsvariante werden die Daten zunächst über einen Inputbuffer (IB) an einen 8-Punkt FFT-Block (FFT) übergeben. Am Ausgang erfolgt eine Multiplikation und Zwischenspeicherung im Buffer (B1). Danach wird eine weitere 8-Punkt FFT in einem weiteren 8-Punkt FFT-Block (FFT) ausgeführt. Die Daten werden dann in einen Buffer (B2) geschrieben. Dieser dient als Ausgangsbuffer. Die Daten werden am Ausgang (OP) ausgelesen. Es sind zwei 8-Punkt FFT-Blöcke (FFT) und zwei Buffer (B1/B2) sowie ein Multiplizierer (M) notwendig.

### Beispiel 3:

In Abwandlung zu den Beispielen 1 und 2 werden in einer weiteren Ausführungsvariante zwei parallele Inputbuffer (IB) verwendet, wodurch ein erhöhter Datendurchsatz erreicht wird. Die serien-parallel Wandlung der nächsten 64 Daten kann beginnen, bevor die aktuelle FFT-Operation abgeschlossen ist.

### Beispiel 4:

In Abwandlung zu den Beispielen 1 bis 3 wird eine inverse Fast Fourier Transformation durch Vertauschen von Imaginärteil und Realteil der Datensignale sowohl am Eingang (IP) als auch am Ausgang (OP) erzeugt

### Beispiel 5:

In Abwandlung zu den Beispielen 1 bis 3 werden unter Umgehung oder Entfernung des Multiplizieres (M) und Änderung der Koeffizienten innerhalb der FFT-Blöcke eine diskrete 8x8-Punkt Kosinus und oder Sinus Transformationen durchgeführt.

Die Schaltungsanordnung zur Durchführung des in den Beispielen 1 bis 5 beschriebenen Verfahrens besteht aus einem oder mehreren parallel angeordneten Inputbuffern (IB), einem oder mehreren FFT-Blöcken (FFT), wobei dieser auf der Dekomposition einer 64-Punkt Fast Fourier Transformation in eine 8-Punkt Fast Fourier Transformation basiert und Multiplikationen durch die Verwendung von Addition und Subtraktion und Schieberegisteroperationen durchführt und die benötigten Koeffizienten fest in dem FFT-Block (FFT) implementiert sind, einem Multiplizierer (M), wobei dieser Multiplikationen nur aus Additionen, Subtraktionen und Schieberegisteroperationen durchführt und einem oder mehreren Buffem (B1/B2), welche sowohl als Zwischenspeicher als auch als Daten-Ausgangsbuffer für den Ausgang (OP) dienen und ist in den Figuren 1 bis 2 dargestellt.

Zur Anwendung kommt das Verfahren, wie in den Beispielen, unter anderem in der Telekommunikation, bei der Datenkompression, in der Optik, bei der Wahrscheinlibhkeitsrechnung, in der Quantenmechanik, in der Signaltheorie und in der Nachrichtentechnik.

In der vorliegenden Beschreibung wurde anhand konkreter Ausführungsbeispiele ein Verfahren und eine Schaltungsanordnung zur Durchführung einer Fast Fourier Transformation, insbesondere einer komplexen 64-Punkt Fast Fourier Transformation auf der Basis einer 8-Punkt Fast Fourier Transformation sowie Anwendungen derselben erläutert.

## Patentansprüche

1. Verfahren zur Durchführung einer Fast Fourier Transformation von Datensignalen, bei dem
- Datensignale in einem oder mehreren parallel angeordneten Inputbuffern (IB) eingelesen werden,
- die Datensignale am Ausgang des Inputbuffers (IB) parallel zur Verfügung stehen,
- die am Ausgang der Inputbuffer (IB) parallel zur Verfügung stehenden Datensignale in Blöcken an einen FFT-Block (FFT) übertragen werden,
- der FFT-Block (FFT) eine Transformation basierend auf der Dekomposition einer 64-Punkt Fast Fourier Transformation in eine 8-Punkt Fast Fourier Transformation durchführt,
- der FFT-Block (FFT) Multiplikationen intern durch die Verwendung von Addition und Subtraktion und Schieberegisteroperationen durchführt,
- der FFT-Block (FFT) die Transformation mittels in dem FFT-Block (FFT) implementierten Koeffizienten durchführt
- die aus dem FFT-Block (FFT) seriell vorliegenden Datensignale einen Multiplizierer (M) durchlaufen und nach Durchlauf des Multiplizierers (M) in einem Buffer (B1) zwischengespeichert werden,
- die aus dem FFT-Block (FFT) seriell vorliegenden Datensignale, die im Multiplizierer (M) mit 1 zu multiplizieren wären, unter Umgehung des Multiplizierers (M) direkt in dem Buffer (B1) zwischengespeichert werden,
- die in dem Buffer (B1) zwischengespeicherten Datensignale am Ausgang des Buffers (B1) parallel zur Verfügung stehen,
- diese parallelen Datensignale aus dem Buffer (81) wiederum in den FFT-Block (FFT) eingeschrieben werden,
- die Datensignale nach Durchlaufen des FFT-Blocks (FFT) unter Umgehung des Multiplizierers (M) in den Buffer (B1) zwischengespeichert und
- die Datensignale aus dem Buffer (B1) seriell am Ausgang (OP) ausgelesen werden.

2. Verfahren zur Durchführung einer Fast Fourier Transformation von Datensignalen, bei dem
- Datensignale in einem oder mehreren parallel angeordneten Inputbuffern (IB) eingelesen werden,
- die am Ausgang der Inputbuffer (IB) parallel zur Verfügung stehenden Datensignale in Blöcken an einen FFT-Block (FFT) übertragen werden-der FFT-Block (FFT) eine Transformation basierend auf der Dekomposition einer 64-Punkt Fast Fourier Transformation in eine 8-Punkt Fast Fourier Transformation durchführt,
- der FFT-Block (FFT) Multiplikationen intern durch die Verwendung von Addition und Subtraktion und Schieberegisteroperationen durchführt,
- der FFT-Block (FFT) die Transformation mittels in dem FFT-Block (FFT) implementierten Koeffizienten durchführt, die aus dem FFT-Block (FFT) seriell vorliegenden Datensignale einen Multiplizierer (M) durchlaufen und nach Durchlauf des Multiplizierers (M) in einem Buffer (B1) zwischengespeichert werden,
- die aus dem FFT-Block (FFT) seriell vorliegenden Datensignale, die im Multiplizierer (M) mit 1 zu multiplizieren wären, unter Umgehung des Multiplizierers (M) direkt in dem Buffer (B1) zwischengespeichert werden,
- die in dem Buffer (B1) zwischengespeicherten Datensignale am Ausgang des Buffers (B1) parallel zur Verfügung stehen,
- diese parallelen Datensignale aus dem Buffer (B1) in einen weiteren FFT-Block (FFT) eingeschrieben werden,
- die Datensignale nach Durchlaufen des weiteren FFT-Blocks (FFT) in einem zweiten Buffer (B2) zwischengespeichert werden und am Ausgang des zweiten Buffers (B2) parallel zur Verfügung stehen, und die Datensignale aus dem zweiten Buffer (B2) seriell am Ausgang (OP) ausgelesen werden.

3. Verfahren nach Anspruch 1 oder 2, **dadurch gekennzeichnet, dass** der Multiplizierer (M) Multiplikationen nur aus Additionen, Subtraktionen und Schieberegisteroperationen durchführt und mehrere Multiplikationsoperationen parallel ausführen kann.

4. Verfahren nach einem oder mehreren der vorangegangenen Ansprüche, **dadurch gekennzeichnet, dass** eine inverse Fast Fourier Transformation durch Vertauschen von Imaginärteil und Realteil der Datensignale sowohl am Eingang (IP) als auch am Ausgang (OP) erzeugt wird.

5. Schaltungsanordnung zur Durchführung des in den Ansprüchen 1 - 4 beschriebenen Verfahrens, bestehend aus einem oder mehreren parallel oder seriell angeordneten Inputbuffern (IB), einem oder mehreren FFT-Blöcken (FFT), wobei dieser/diese ausgebildet sind, eine 64-Punkt Fast Fourier Transformation auf der Basis einer 8-Punkt Fast Fourier Transformation zu dekomponieren, Multiplikationen durch die Verwendung von Addition und Subtraktion sowie Schieberegisteroperationen durchzuführen, wobei die benötigten Koeffizienten fest in dem FFT-Block bzw. den FFT-Blöcken (FFT) implementiert sind, einem Multiplizierer (M) der ausgebildet ist, Multiplikationen nur durch Additionen, Subtraktionen und Schieberegisteroperationen durchzuführen, und mindestens einem Buffer (B1, B2), welcher sowohl als Zwischenspeicher als auch als Datenausgangsspeicher (OP) dient.

## Claims

1. Method for carrying out a fast Fourier transformation of data signals wherein
- data signals are read in in one or more input buffers (IB) arranged in parallel;
- the data signals are available in parallel at the output of the input buffer (IB);
- the data signals that are available in parallel at the output of the input buffers (IB) are transmitted in blocks to an FFT block (FFT);
- the FFT block (FFT) carries out a transformation based on the decomposition of a 64-point fast Fourier transformation into an 8-point fast Fourier transformation;
- the FFT block (FFT) carries out multiplications internally by using addition and subtraction and shift register operations;
- the FFT block (FFT) carries out the transformation by means of coefficients that are implemented in the FFT block (FFT);
- the data signals that are provided in series from the FFT block (FFT) pass through a multiplier (M) and, after passing through the multiplier (M), are temporarily stored in a buffer (B1);
- the data signals that are provided in series from the FFT block (FFT), which would be multiplied by one in the multiplier (M), are temporarily stored in the buffer (B1), bypassing the multiplier (M);
- the data signals that are temporarily stored in the buffer (B1) are available in parallel at the output of the buffer (B1);
- these parallel data signals from the buffer (B1) are in turn written into the FFT block (FFT);
- the data signals, after passing through the FFT block (FFT), are temporarily stored in the buffer (B1), bypassing the multiplier (M); and
- the data signals from the buffer (B1) are read out in series at the output (OP).

2. Method for carrying out a fast Fourier transformation of data signals wherein
- data signals are read in in one or more input buffers (IB) arranged in parallel;
- the data signals that are available in parallel at the output of the input buffers (IB) are transmitted in blocks to an FFT block (FFT); and the FFT block (FFT) carries out a transformation based on the decomposition of a 64-point fast Fourier transformation into an 8-point fast Fourier transformation;
- the FFT block (FFT) carries out multiplications internally by using addition and subtraction and shift register operations;
- the FFT block (FFT) carries out the transformation by means of coefficients that are implemented in the FFT block (FFT); and the data signals that are provided in series from the FFT block (FFT) pass through a multiplier (M) and, after passing through the multiplier (M), are temporarily stored in a buffer (B1);
- the data signals that are provided in series from the FFT block (FFT), which would be multiplied by one in the multiplier (M), are temporarily stored in the buffer (B1), bypassing the multiplier (M);
- the data signals that are temporarily stored in the buffer (B1) are available in parallel at the output of the buffer (B1);
- these parallel data signals from the buffer (B1) are written into a further FFT block (FFT); and
- the data signals, after passing through the further FFT block (FFT), are temporarily stored in a second buffer (B2) and are available in parallel at the output of the second buffer (B2), and the data signals from the second buffer (B2) are read out in series at the output (OP).

3. Method according to either claim 1 or claim 2, **characterised in that** the multiplier (M) carries out multiplications only from additions, subtractions and shift register operations, and can carry out a plurality of multiplication operations simultaneously.

4. Method according to any one or more of the preceding claims, **characterised in that** an inverse fast Fourier transformation is generated by exchanging the imaginary part and real part of the data signals both at the input (IP) and at the output (OP).

5. Circuit arrangement for carrying out the method described in claims 1 to 4, consisting of one or more input buffers (IB) arranged in parallel or in series, one or more FFT blocks (FFT), this block/these blocks being configured to decompose a 64-point fast Fourier transformation on the basis of an 8-point fast Fourier transformation and to carry out multiplications by using addition and subtraction and also shift register operations, the required coefficients being fixedly implemented in the FFT block or the FFT blocks (FFT), a multiplier (M), which is configured to carry out multiplications only by means of additions, subtractions and shift register operations, and at least one buffer (B1, B2), which acts both as an intermediate memory and as a data output memory (OP).

## Revendications

1. Procédé pour appliquer une transformation de Fourier rapide à des signaux de données, selon lequel
- des signaux de données sont inscrits dans un ou plusieurs tampons d'entrée (IB) disposés en parallèle,
- les signaux de données à la sortie des tampons d'entrée (IB) sont disponibles en parallèle,
- les signaux de données disponibles en parallèle à la sortie des tampons d'entrée (IB) sont transmis selon des blocs à un bloc FFT (FFT),
- le bloc FFT (FFT) exécute une transformation basée sur la décomposition d'une transformation de Fourier rapide en 64 points en une transformation de Fourier rapide en 8 points,
- le bloc FFT (FFT) exécute de façon interne des multiplications en utilisant une addition et une soustraction et des opérations de registres à décalage,
- le bloc FFT (FFT) exécute la transformation à l'aide de coefficients intervenant dans le bloc FFT (FFT),
- les signaux de données présents en série à partir du bloc FFT (FFT) traversent un multiplieur (M) et, après avoir traversé le multiplieur (M), sont mémorisés temporairement dans un tampon (B1),
- les signaux de données, qui sont présents en série à partir du bloc FFT (FFT) et qui devraient être multipliés par 1 dans le multiplieur (M), sont mémorisés temporairement directement dans le tampon (B1) en contournant le multiplieur (M),
- les signaux de données mémorisés temporairement dans le tampon (B1) sont disponibles en parallèle à la sortie du tampon (B1),
- ces signaux de données parallèles tirés du tampon (B1) sont à nouveau inscrits dans le bloc FFT (FFT),
- après avoir franchi le bloc FFT (FFT), les signaux de données sont mémorisés temporairement dans le tampon (B1) après avoir contourné le multiplieur M, et
- les signaux de données tirés du tampon (B1) sont lus en série sur la sortie (OP).

2. Procédé pour appliquer une transformation de Fourier rapide à des signaux de données, selon lequel
- des signaux de données sont inscrits dans un ou plusieurs tampons d'entrée (IB) disposés en parallèle,
- les signaux de données disponibles en parallèle à la sortie des tampons d'entrée (IB) sont transmis dans des blocs à un bloc FFT (FFT),
- le bloc FFT (FFT) exécute une transformation basée sur une décomposition d'une transformation de Fourier rapide à 64 points en une transformation de Fourier rapide à 8 points,
- le bloc FFT (FFT) exécute de façon interne des multiplications en utilisant l'addition et la soustraction et des opérations de registres à décalage,
- le bloc FFT (FFT) exécute la transformation à l'aide de coefficients mis en jeu dans le bloc FFT (FFT), les signaux de données présents en série à partir du bloc FFT (FFT) traversent un multiplieur (M) et, après avoir traversé le multiplieur (M), sont mémorisés temporairement dans un tampon (B1),
- les signaux de données présents en série à partir du bloc FFT (FFT), qui devraient être multipliés par 1 par le multiplieur (M), sont mémorisés temporairement directement dans le tampon (B1) en contournant le multiplieur (M),
- les signaux de données mémorisés temporairement dans le tampon (B1) sont disponibles en parallèle à la sortie du tampon (B1),
- ces signaux de données parallèles tirés du tampon (B1) sont à nouveau inscrits dans un autre bloc FFT (FFT),
- après avoir franchi l'autre bloc FFT (FFT), les signaux de données sont mémorisés temporairement dans un second le tampon (B2) et sont disponibles en parallèle à la sortie du second tampon (B2), et les signaux de données tirés du second tampon (B2) sont lus en série sur la sortie (OP).

3. Procédé selon la revendication 1 ou 2, **caractérisé en ce que** le multiplieur (M) exécute des multiplications uniquement constituées d'additions, de soustractions et d'opérations dans des registres à décalage et peut exécuter en parallèle plusieurs opérations de multiplications.

4. Procédé selon l'une ou plusieurs des revendications précédentes, **caractérisé en ce qu'**une transformation de Fourier rapide inverse est réalisée par permutation de la partie imaginaire et de la partie réelle des signaux de données aussi bien à l'entrée (IB) qu'à la sortie (OP).

5. Montage pour la mise en oeuvre du procédé décrit dans les revendications 1 à 4, constitué par un ou plusieurs tampons d'entrée (IB) montés en parallèle ou en série, un ou plusieurs blocs FFT (FFT), ce ou ces blocs étant agencés de manière à décomposer une transformation de Fourier rapide en 64 points sur la base d'une transformation de Fourier rapide en 8 points, exécuter des multiplications moyennant l'utilisation d'une addition et d'une soustraction ainsi que d'opérations dans des registres à décalage, les coefficients nécessaires étant mis en oeuvre rapidement dans le bloc FFT ou dans les blocs FFT (FFT), dans un multiplieur (M) qui est agencé de manière à exécuter des multiplications en utilisant uniquement des additions, des soustractions et des opérations dans des registres à décalage, et au moins un tampon (B1, B2), qui est utilisé aussi bien en tant que mémoire intermédiaire qu'en tant que mémoire de sortie de données (OP).
